**Europäisches Patentamt**

**European Patent Office**

**Office européen des brevets**

(19)

(11) Veröffentlichungsnummer : **0 469 497 B1**

(12)

# EUROPÄISCHE PATENTSCHRIFT

(45) Veröffentlichungstag der Patentschrift :
**04.05.94 Patentblatt 94/18**

(51) Int. Cl.$^5$ : **C09D 17/00**, C09D 5/44,
C09D 163/00, C25D 13/10

(21) Anmeldenummer : **91112680.3**

(22) Anmeldetag : **27.07.91**

(54) **Verfahren zur Herstellung von Pigmentpastenharzen für kathodisch abscheidbare Überzugsmittelzusammensetzungen.**

(30) Priorität : **02.08.90 AT 1630/90**

(43) Veröffentlichungstag der Anmeldung :
**05.02.92 Patentblatt 92/06**

(45) Bekanntmachung des Hinweises auf die
Patenterteilung :
**04.05.94 Patentblatt 94/18**

(84) Benannte Vertragsstaaten :
**BE DE ES FR GB IT NL SE**

(56) Entgegenhaltungen :
**AT-B- 380 264**
**AT-B- 391 475**

(73) Patentinhaber : **Vianova Kunstharz**
**Aktiengesellschaft**
**Bundesstrasse 175**
**A-8402 Werndorf (AT)**

(72) Erfinder : **Hönig, Helmut, Dr.**
**Seebacherstrasse 10**
**A-8010 Graz (AT)**
Erfinder : **Pampouchidis, Georg, Dr.**
**Obere Teichstrasse 31**
**A-8010 Graz (AT)**
Erfinder : **Paar, Willibald, Dr.**
**Schanzelgasse 19**
**A-8010 Graz (AT)**
Erfinder : **Matzer, Herbert**
**Grossgrabenweg 21**
**A-8010 Graz (AT)**
Erfinder : **Valtrovic, Manfred**
**Hauseggerstrasse 61**
**A-8020 Graz (AT)**

EP 0 469 497 B1

Jouve, 18, rue Saint-Denis, 75001 PARIS

## Beschreibung

Die Erfindung betrifft ein Verfahren zur Herstellung von modifizierten Epoxidharzen, die als Pigmentpastenharze für kathodisch abscheidbare Überzugsmittelzusammensetzungen eingesetzt werden können.

Pigmentpastenharze sind ein wichtiger Bestandteil kathodisch abscheidbarer Überzugsmittelzusammensetzungen und beeinflussen wesentlich die Badparameter, sowie die physikalischen und chemischen Beständigkeitseigenschaften der Lackfilme.

Seit langem werden Pigmentpastenharze auf der Basis von Epoxidharzen in der Patentliteratur beschrieben. So werden in den US-PS 3,936,405 und US-PS 4,035,275 kationische wasserverdünnbare Polymere angeführt, die durch Reaktion von 1,2-Epoxidgruppen enthaltenden Polymeren, insbesonders von polyglykolmodifizierten Epoxidharzen, mit Aminsalzen und mit Gemischen von Phosphin-Säuren und Sulfid-Säuren unter Ausbildung von Oniumgruppierungen erhalten werden.

Ähnliche Produkte, die durch Umurethanisierung vernetzt werden, sind in der DE-PS 26 34 211, in der DE-OS 26 34 229 oder in der DE-OS 29 28 769 beschrieben. Auch bei durch Umesterung vernetzbaren Harzen wird die Pigmentbenetzung durch Einführung quartärer Ammoniumgruppen verbessert und dadurch die Verwendung als Pigmentanreibeharz ermöglicht. Diese Variante wird beispielsweise in der DE-OS 33 22 781 aufgezeigt. Zur Verbesserung der Stabilität dieser Pigmentpasten wird gemäß der DE-OS 36 22 710 vorgeschlagen, die Bildung der quartären Ammoniumgruppen in Gegenwart des Pigmentpulvers vorzunehmen.

Pigmentpastenharze, die Überzüge mit verbesserter Korrosionsfestigkeit ergeben, werden gemäß der EP-A1-0 107 088 erhalten, wenn Monoepoxide, wie Alkylenoxide, Glycidylester oder Glycidylether mit langkettigen tertiären Aminen in Gegenwart von Säure und/oder Wasser unter Bildung von quartären Ammoniumgruppen umgesetzt werden. Eine höhere Pigmentbeladung wird gemäß der EP-A1-0 107 098 ermöglicht, wenn diese Systeme überdies Amidgruppen aufweisen.

Entsprechend der EP-B1-0 107 089 werden Polyepoxide in gleicher Weise umgesetzt, wodurch ebenfalls die Verarbeitung mit höheren Pigmentanteilen möglich ist.

Pigmentpastenharze auf Basis von alkylphenolmodifizierten Epoxidharzen, die Sulfoniumgruppen aufweisen, wie sie in der EP-A2-0 251 772 beschrieben werden, sollen einen höheren Filmaufbau gewährleisten.

Ein weiterer Typ eines Pigmentpastenharzes wird in der EP-A1-0 199 473 angeführt, wobei ein epoxidiertes Polybutadien mit einem sekundären Amin reagiert wird und, nach Zusatz einer Säure und einem Monoepoxid, die Einführung von quartären Ammoniumgruppen erfolgt.

Pigmentpastenharze auf Basis von Epoxidharzen, die Oxazolidingruppen aufweisen, werden beispielsweise in den AT-PS 365214 und AT-PS 380264 beschrieben. Harze dieser Art zeichnen sich durch gute Allgemeineigenschaften aus und haben trotz der Nachteile bezüglich ihrer Dispergierbarkeit im Badmaterial auch in der Praxis Verwendung gefunden.

Wie sich aus der umfangreichen Literatur auf dem Gebiet der Formulierung von Pigmentpasten für kathodisch abscheidbare Überzugsmittelzusammensetzungen erkennen läßt, handelt es sich dabei um eine Aufgabe, für die trotz jahrelanger Versuche und einer großen Anzahl von Vorschlägen noch immer keine in jeder Hinsicht befriedigende Lösung vorliegt.

In der EP-A2-0 361 243 wird ein Verfahren zur Herstellung solcher Pigmentpastenharze beschrieben, wobei ein gegebenenfalls modifiziertes Epoxidharz, welches eine Glasübergangstemperatur zwischen 10 und 40°C aufweist, mit einem primär-tertiären Diamin reagiert wird, die gebildeten sekundären Aminogruppen mit Formaldehyd zu Oxazolidingruppen umgesetzt werden und die tertiären Aminogruppen unter Verwendung einer organischen Säure und einer Monoglycidylverbindung quaterniert werden.

In Weiterverfolgung dieser Arbeitsrichtung, die zu ausgezeichneten Produkten führte, wurde nun gefunden, daß die guten Ergebnisse auch ohne Quaternierung erzielt werden können, wenn als Ausgangsmaterial Epoxidharze eingesetzt werden, die in ausreichender Menge Polyoxyalkylenstrukturen aufweisen.

Die vorliegende Erfindung betrifft demgemäß ein Verfahren zur Herstellung von Pigmentpastenharzen auf der Basis von modifizierten Epoxidharzen für kathodisch abscheidbare Überzugsmittelzusammensetzungen, welches dadurch gekennzeichnet ist, daß man

(A) eine Diepoxidverbindung oder ein Gemisch mehrerer Diepoxidverbindungen, die, bezogen auf ihr Gesamtgewicht, einen Anteil an Polyoxyalkylenstrukturen von 10 bis 50 Gew.-%, einen Anteil an Alkyl- und/oder Alkylen- und/oder Hydroxyalkylresten mit mehr als 3 C-Atomen von bis zu 20 Gew.-%, vorzugsweise von 5 bis 15 Gew.-%, und eine Glasübergangstemperatur zwischen 10 und 40°C aufweisen, mit

(B) 50 bis 100 Mol%, bezogen auf die freien Epoxidgruppen von (A), eines primär-tertiären Diamins, vorzugsweise eines N,N-Dialkylaminoalkylamins, und

(C) gleichzeitig oder anschließend die gegebenenfalls verbleibenden freien Epoxidgruppen mit einem primären oder sekundären Amin umsetzt,
und

EP 0 469 497 B1

(D) das Reaktionsprodukt mit 50 bis 100 Mol% Formaldehyd, bezogen auf die Summe der primären Aminogruppen der gemäß (B) und (C) eingesetzten Amine, unter Bildung von Oxazolidinstrukturen umsetzt.

Die Erfindung betrifft weiters die nach diesem Verfahren hergestellten Pigmentpastenharze und ihre Verwendung für kathodisch abscheidbare Überzugsmittelzusammensetzungen.

Die erfindungsgemäß hergestellten Produkte ergeben auch bei verschiedenartiger Zusammensetzung der eingesetzten Pigmente Pigmentpasten, welche die unterschiedlichen Anforderungen der Praxis erfüllen, und sowohl in konzentrierter auch auch in verdünnter Form eine praxisgerechte Stabilität aufweisen, aufgrund ihrer Rheologie leicht verarbeitbar sind, eine einwandfreie Filmausbildung bei der Abscheidung und beim Vernetzungsvorgang gewährleisten und die Eigenschaften der applizierten Filme nicht negativ beeinflussen.

Die erfindungsgemäß eingesetzte Komponente (A) besteht aus einer oder mehreren Diepoxidverbindungen, welche, bezogen auf ihr Gesamtgewicht, einen Anteil an Polyoxyalkylenstrukturen von 10 bis 50 Gew.-%, einen Anteil an Alkyl- und/oder Alkylen- und/oder Hydroxyalkylresten mit mehr als 3 C- Atomen von bis zu 20 Gew.-%, vorzugsweise 5 bis 15 Gew.-% , und eine Glasübergangstemperatur zwischen 10 und 40°C aufweisen.

Die notwendigen Polyoxyalkylenstrukturen können sowohl durch den Einsatz von solche Strukturen aufweisenden Diepoxidverbindungen unter Verknüpfung mit Diepoxidverbindungen auf Polyphenolbasis, als auch durch Kettenverlängerung solcher Polyphenolepoxidharze durch Polyoxyalkylenderivate erhalten werden. Diglycidylether von Polyalkylenglykolen mit Epoxidäquivalentgewichten von 180 bis 500 sind auch im Handel erhältlich, insbesonders solche auf Basis von Polypropylenglykolen. Diepoxidverbindungen von Polyphenolen mit unterschiedlichem Epoxidäquivalentgewicht sind in großem Umfang als Handelsprodukte bekannt. Die gebräuchlichsten Typen basieren auf dem Bisphenol A.

Zur Herstellung von Polyoxyalkylenstrukturen aufweisenden Diepoxidverbindungen können weiters Umsetzungen von Polyphenolepoxidharzen mit Polyoxyalkylenglykolen oder disekundären, gegebenenfalls substituierten Polyoxyalkylenpolyaminen herangezogen werden. Die Herstellung solcher Dialkylamine ist beispielsweise in der AT-PS 392 648 oder in der EP-A2-0 369 752 beschrieben. Ebenso können auch disekundäre Amine, wie sie durch Umsetzung von diprimären Alkylendiaminen oder Polyoxyalkylendiaminen mit entsprechenden Monoglycidylestern oder -ethern erhalten werden, zum Einsatz kommen.

Durch diese Umsetzungen werden auch die gewünschten Alkyl- und/oder Alkylen- und/oder Hydroxyalkylreste mit mehr als 3 C-Atomen in die Komponente (A) eingeführt.

Die bevorzugten Komponenten (A) weisen einen schematischen Aufbau Z-Y-X-Y-Z auf, wobei ursprünglich X ein aliphatisches Epoxidharz mit Polyoxyalkylenstrukturen, Y ein primäres (Hydroxy)alkylmonoamin oder ein sekundäres (Polyoxy)alkylendiamin oder ein Diphenol und Z ein Bisphenol A-Epoxidharz darstellt.

Die Verfahren für die aufgezählten und für gegebenenfalls andere Modifikationen dieser Art sind in der einschlägigen Literatur zu finden.

50 bis 100 Mol% der freien Epoxidgruppen dieser Epoxidharze werden, vorzugsweise in Gegenwart eines reaktionsinerten Lösungsmittels, mit einem primär-tertiären Diamin reagiert. Vorzugsweise werden dafür N,N-Dialkylaminoalkylamine, wie das 2-Dimethylaminoethylamin oder homologe Verbindungen, eingesetzt.

Als organische Lösungsmittel werden wasserverdünnbare oder zumindest wassertolerante Lösungsmittel verwendet, welche die Reaktionen bei der Herstellung unter den gegebenen Bedingungen nicht beeinflussen. Dazu zählen die Glykolmonoether und Glykoldiether oder Methylisobutylketon.

Gegebenenfalls verbleibende Epoxidgruppen werden mit primären oder sekundären Aminen, insbesonders Alkyl- und/oder Alkanolaminen umgesetzt. Die primären Amine werden dabei vorzugsweise in solchen Mengen eingesetzt, daß pro Epoxidgruppe ein Mol des Amins verwendet wird. Die so resultierenden sekundären Aminogruppen können in die nächste Reaktionsstufe, d. h. in die Bildung von Oxazolidinringen, einbezogen werden. Die Reaktion mit den Monoaminen erfolgt vorteilhafterweise gleichzeitig mit der Diaminreaktion.

Die bei der Aminreaktion gebildeten sekundären β-Hydroxyalkylaminverbindungen werden in der nächsten Reaktionsstufe mit 50 bis 100 Mol% Formaldehyd unter Abspaltung von jeweils 1 Mol Reaktionswasser pro Mol eingesetztem Formaldehyd unter Ausbildung von Oxazolidinstrukturen reagiert. Das Reaktionswasser wird mit Hilfe eines Schleppmittels, z. B. Methylisobutylketon, durch azeotrope Destillation aus der Reaktionsmasse entfernt.

Zur Erzielung der Wasserverdünnbarkeit wird das Produkt mit einer organischen Säure versetzt, wobei die Menge an Säure 70 - 120, vorzugsweise ca. 100 Millimol pro 100 g Festharz beträgt. Als Säure wird Ameisensäure, Essigsäure oder Milchsäure verwendet. Im allgemeinen wurde festgestellt, daß bei Verwendung geringerer Säuremengen zwar die Löslichkeit des Pastenharzes gegeben sein kann, jedoch nicht die optimalen Stabilitätseigenschaften erreicht werden und auch die Pigmentbenetzung verschlechtert wird. Das Produkt wird dann mit Wasser auf die gewünschte Verarbeitungsviskosität eingestellt.

Die erfindungsgemäß hergestellten Produkte dienen zur Herstellung von Pigmentpasten für kathodisch abscheidbare Überzugsmittelzusammensetzungen. Neben den Pigmenten können die Pasten die üblichen Zusatzstoffe, wie Netzmittel, Entschäumer u. ä., enthalten.

Die Formulierung von Pigmentpasten sowie die Auswahl und die Methoden der Anreibung der Pigmente sind aus der Literatur bekannt. Die Komplettierung der Pigmentpasten zu einem Badmaterial bzw. zu einer Nachgabekomponente erfolgt ebenfalls in der in der Praxis üblichen Weise. Als Hauptbindemittel können dabei die bekannten Produkte eingesetzt werden, wobei der Anteil des Pastenharzes vom gesamten Harzanteil der Zusammensetzung zwischen 5 und 50 Gew.-% betragen kann. Die Methoden der Elektrobeschichtung sind ebenfalls literaturbekannt und bedürfen keiner weiteren Beschreibung.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

### Beispiel 1

(a) Herstellung der Komponente (A):
In ein geeignetes Reaktionsgefäß, ausgestattet mit Rührer, Thermometer und Destillationsvorrichtung, werden 258 Tle 2-Ethylhexylamin (2 Mol) vorgelegt und auf 80°C erwärmt. Bei 80°C werden 380 Tle eines aliphatischen Epoxidharzes (Basis Polypropylenglykol, Epoxidharzäquivalentgewicht ca. 190) gleichmäßig innerhalb einer Stunde zugegeben, dabei steigt die Temperatur auf 120°C. Bei 120°C wird der Ansatz eine Stunde nachreagiert. Anschließend werden 1175 Tle Monoethylenglykolmonobutylether und bei 70°C 1900 Tle eines Epoxidharzes auf Bisphenol A-Basis (Epoxidäquivalentgewicht ca. 475) zugegeben und der Ansatz auf 120°C erwärmt und bei dieser Temperatur 1 1/2 Stunden reagiert. Das Zwischenprodukt weist einen Anteil an Polyoxyalkylenstruktureinheiten von 11 Gew.-% und einen Anteil an Alkylresten mit mehr als 3 C-Atomen von 9 Gew.-% auf.
(b) Herstellung des Pastenharzes:
Zu dem nach (a) erhaltenen Zwischenprodukt werden bei 100°C 204 Tle 3-Dimethylamino-1-propylamin (2 Mol) zugegeben und 1 Stunde bei 100°C reagiert. Nach Zugabe von 314 Tlen Monoethylenglykolmonobutylether und 66 Tlen Paraformaldehyd, 91%ig, (2 Mol), werden bei ca. 140°C unter azeotroper Destillation mit Methylisobutylketon als Schleppmittel ca. 36 Tle Reaktionswasser abdestilliert. Danach wird das Methylisobutylketon unter Vakuum entfernt und die Masse mit 774 Tlen Monoethylenglykolmonobutylether auf einen Festkörpergehalt von 55 % verdünnt.

### Beispiel 2

(a) Herstellung der Komponente (A):
In einem geeigneten Reaktionsgefäß werden zu 238 Tlen 2-Amino-2-ethylpropandiol-1,3 (2 Mol) bei 80°C 640 Tle eines aliphatischen Epoxidharzes (Basis Polypropylenglykol, Epoxidäquivalentgewicht ca. 320) gleichmäßig innerhalb einer Stunde zugegeben. Während der Zugabe steigt die Temperatur auf 120°C. Nach einer Reaktionszeit von einer Stunde bei 120°C werden 1278 Tle Monoethylenglykolmonobutylether und bei 70°C 1900 Tle eines Bisphenol A-Epoxidharzes (Epoxidäquivalentgewicht ca. 475) zugegeben. Der Ansatz wird auf 120°C erwärmt und bei dieser Temperatur 1 1/2 Stunden gerührt. Das Zwischenprodukt weist einen Anteil an Polyoxyalkylenstrukturen von 19 Gew.-% und einen Anteil an Hydroxyalkylresten mit mehr als 3 C-Atomen von 7,4 Gew.-% auf.
(b) Herstellung des Pastenharzes:
Bei 80°C werden 204 Tle 3-Dimethylamino-1-propylamin (2 Mol) zugegeben und der Ansatz bei 100°C eine Stunde reagiert. Danach werden 341 Tle Monoethylenglykolmonobutylether und 66 Tle Paraformaldehyd, 91%ig, (2 Mol), zugegeben. Bei einer Temperatur von ca. 140°C werden mittels azeotroper Destillation mit Methylisobutylketon als Schleppmittel ca. 36 Tle Reaktionswasser abdestilliert. Das Methylisobutylketon wird dann unter Vakuum entfernt und der Ansatz mit 840 Tlen Monoethylenglykolmonobutylether auf einen Festkörpergehalt von 55 % verdünnt.

### Beispiel 3

(a) Herstellung der Komponente (A):
In einem Reaktionsgefäß werden bei 80°C zu 905 Tlen Monoethylenglykolmonobutylether 640 Tle eines aliphatischen Epoxidharzes (Basis Polypropylenglykol, Epoxidharzäquivalentgewicht ca. 320), 800 Tle Epoxidharz auf Bisphenol A-Basis (Epoxidäquivalentgewicht ca. 200), 456 Tle (2 Mol) Bisphenol A und 3 Tle Triethylamin zugegeben. Die Masse wird auf 130°C erwärmt und 2 Stunden gerührt. Das Produkt weist einen Polyoxyalkylenanteil von 28 Gew.-% auf.

(b) Herstellung des Pastenharzes:

Zu dem oben hergestellten Zwischenprodukt werden bei 80°C 204 Tle 3-Dimethylamino-1-propylamin (2 Mol) zugegeben und bei 100°C eine Stunde reagiert. Anschließend werden 245 Tle Monoethylenglykolmonobutylether und 66 Tle Paraformaldehyd, 91%ig, (2 Mol), zugegeben. Bei einer Temperatur von ca. 140°C wird das entstehende Reaktionswasser mit Hilfe von Methylisobutylketon als Schleppmittel azeotrop abgetrennt. Nach Bildung von ca. 36 Tlen Reaktionswasser wird das Methylisobutylketon unter Vakuum entfernt. Bei ca. 80°C wird der Ansatz mit 597 Tlen Monoethylenglykolmonobutylether auf einen Festkörpergehalt von 55 % verdünnt.

Herstellung und Prüfung einer Pigmentpaste aus den Produkten gemäß Beispiel 1 bis 3

Die gemäß Beispiel 1 bis 3 hergestellten Produkte wurden mit 100 mMol Essigsäure / 100 g Festharz neutralisiert und mit deionisiertem Wasser auf einen Festkörpergehalt von 14 % verdünnt.

Auf einer Laborsandmühle wurde nach dem folgenden Ansatz eine Pigmentpaste hergestellt:

```
1428,5 Tle Bindemittel 14%ig
   30   Tle Farbruß
  225   Tle Aluminiumsilikatpigment
  840   Tle Titandioxid
  105   Tle Bleisilikatpigment
------------------------------------------------
2628,5 Tle Pigmentpaste 53,3 %
```

Die Ansätze wiesen eine Viskosität (DIN 53211/20°C) von ca. 20 Sekunden auf und zeigten nach einwöchiger Lagerung bei 50°C praktisch keine Veränderung.

Herstellung der Bindemitteldispersion

Das Bindemittel für die im Elektrotauchlack eingesetzte Bindemitteldispersion wird auf der Basis von modifizierten Epoxidharzen analog Beispiel 1 der AT-PS 353369 hergestellt:

A) Herstellung der Komponente A

In einem mit Rührer, Thermometer, Tropftrichter und Rückflußkühler ausgestatteten Reaktionsgefäß werden 1000 g eines Epoxidharzes auf Bisphenol A-Basis (Epoxidäquivalentgewicht ca. 500) in 500 g Methylisobutylketon (MIBK) bei 60 - 70°C gelöst und 0,2 g Hydrochinon und 168 g Methacrylsäure zugegeben. Die Temperatur wird auf 100 - 120°C gesteigert und die Reaktion bei dieser Temperatur bis zu einer Säurezahl von unter 3 mg KOH/g geführt. Anschließend wird das Reaktionsprodukt bei 60 - 70°C mit 650 g BMI (70 %ige Lösung in MIBK eines basischen Monoisocyanates, hergestellt aus 1 Mol Toluylendiisocyanat und 0,9 Mol Dimethylethanolamin, MG = 254) versetzt und bis zu einem NCO-Wert von praktisch Null reagiert.

B) Herstellung der Komponente B

In einem mit Rührer, Thermometer, Tropftrichter und Rückflußkühler ausgestatteten Reaktionsgefäß werden 400 g eines Epoxidharzes auf Bisphenol A-Basis (Epoxidäquivalentgewicht ca. 200) in 172 g MIBK gelöst und bei 60 - 70°C 210 g Diethanolamin (2 Mol) zugegeben. Nach der Exothermie wird noch eine Stunde bei ca. 130°C (Rückfluß) reagiert. In weiterer Folge wird das Reaktionsprodukt bei 70 - 80°C mit 830 g UMI (70%ige Lösung in MIBK eines ungesättigten Monoisocyanates, hergestellt aus 1 Mol Toluylendiisocyanat und 1 Mol Hydroxyethylmethacrylat, MG = 304) bis zu einem NCO-Wert von praktisch Null umgesetzt.

Herstellung der Dispersion

Die Komponenten A und B werden bei 70°C in einem Mischungsverhältnis von 80/20 gründlich vermischt und mit 30 Millimol Ameisensäure pro 100 g Festharz neutralisiert. Unter Vakuum bei 80°C wird das Lösungsmittel MIBK größtenteils abdestilliert. In weiterer Folge wird das Produkt unter maximaler Rührung und bei fallender Temperatur mit deionisiertem Wasser auf ca. 45 % verdünnt. Bei dieser Konzentration wird 2 Stunden unter Kühlung kräftig dispergiert und der Festkörper bestimmt. Abschließend wird das Produkt mit deionisiertem Wasser weiter auf 35 % verdünnt.

Herstellung einer Elektrotauchlackzusammensetzung

Gemäß der folgenden Formulierung wurde ein Badmaterial für die Elektrotauchlackierung hergestellt:

```
1600,-   Bindemitteldispersion, 35%ig

2872,5   deionisiertes Wasser

527,5    Pigmentpaste, 53,3 % gemäß Beispiel 1 bis 3
-----------------------------------------------------------
5000,-   Lack
```

Die Lacke wiesen einen Festkörpergehalt von 16,8 % und einen pH-Wert von 6,0-6,2 auf. Nach 25 Stunden Homogenisierung durch Rühren wurden die Lacke durch ein gewogenes Perlonsieb (Maschenweite 30 μm) filtriert. Der Rückstand im Sieb betrug je nach Beispiel 6 bis 8 mg pro Liter Badmaterial.

Mit den Lacken wurden zinkphosphatierte Stahlbleche unter folgenden Badbedingungen beschichtet und eingebrannt:

| | |
|---|---|
| Badtemperatur: | 28 - 30°C |
| Beschichtungsspannung: | 300 V |
| Beschichtungszeit: | 2 Minuten |
| Einbrennbedingungen: | 15 Minuten/180°C |
| Filmschichtstärke: | 23 - 25 μm |

Die Filme hatten eine glatte Oberfläche und wurden im VDA-Wechseltest gemäß VDA-Prüfblatt 621-415 auf ihre Korrosionsfestigkeit geprüft. Nach 10 Runden ergab sich in allen Fällen eine Unterwanderung von maximal 2 mm vom Kreuzschnitt.

Abscheidungen auf einem rechtwinkelig gebogenen Stahlblech (L-Blechtest) ergaben glatte Flächen auch am horizontalen Blechabschnitt (keine Pigmentsedimentation). Bei einer Wiederholung der Prüfungen nach einer Alterungszeit von 3 Wochen (Raumtemperatur) waren die Resultate praktisch unverändert.

## Patentansprüche

**Patentansprüche für folgende Vertragsstaaten : BE, DE, FR, GB, IT, NL, SE,**

1.  Verfahren zur Herstellung von Pigmentpastenharzen auf der Basis von modifizierten Epoxidharzen für kathodisch abscheidbare Überzugsmittelzusammensetzungen, <u>dadurch gekennzeichnet</u>, daß man
    (A) eine Diepoxidverbindung oder ein Gemisch mehrerer Diepoxidverbindungen, die, bezogen auf ihr Gesamtgewicht, einen Anteil an Polyoxyalkylenstrukturen von 10 bis 50 Gew.-%, einen Anteil an Alkyl- und/ oder Alkylen- und/oder Hydroxyalkylresten mit mehr als 3 C-Atomen von bis zu 20 Gew.-%, vorzugsweise von 5 bis 15 Gew.-%, und eine Glasübergangstemperatur zwischen 10 und 40°C aufweisen, mit
    (B) 50 bis 100 Mol%, bezogen auf die freien Epoxidgruppen von (A), eines primär-tertiären Diamins, vorzugsweise eines N,N-Dialkylaminoalkylamins, und
    (C) gleichzeitig oder anschließend die gegebenenfalls verbleibenden freien Epoxidgruppen mit einem primären oder sekundären Amin umsetzt, und
    (D) das Reaktionsprodukt mit 50 bis 100 Mol% Formaldehyd, bezogen auf die Summe der primären Aminogruppen der gemäß (B) und (C) eingesetzten Amine, unter Bildung von Oxazolidinstrukturen umsetzt.

2.  Verfahren nach Anspruch 1, <u>dadurch gekennzeichnet</u>, daß man als Komponente (A) modifizierte Epoxidharze einsetzt, die nach dem Schema

    Z - Y - X - Y - Z

    aufgebaut sind, wobei als Ausgangsprodukte für X ein aliphatisches Diepoxidharz mit

EP 0 469 497 B1

Polyoxyalkylenstrukturen, für Y ein primäres (Hydroxy)alkylmonoamin oder ein sekundäres (Polyoxy)alkylendiamin oder ein Diphenol und für Z ein Bisphenol A-Epoxidharz verwendet werden.

**3.** Pigmentpastenharze, hergestellt gemäß den Ansprüchen 1 und 2.

**4.** Verwendung der gemäß den Ansprüchen 1 und 2 hergestellten Pigmentpastenharze für kathodisch abscheidbare Überzugsmittelzusammensetzungen.

**Patentansprüche für folgenden Vertragsstaat : ES**

**1.** Verfahren zur Herstellung von Pigmentpastenharzen auf der Basis von modifizierten Epoxidharzen für kathodisch abscheidbare Überzugsmittelzusammensetzungen, <u>dadurch gekennzeichnet</u>, daß man
(A) eine Diepoxidverbindung oder ein Gemisch mehrerer Diepoxidverbindungen, die, bezogen auf ihr Gesamtgewicht, einen Anteil an Polyoxyalkylenstrukturen von 10 bis 50 Gew.-%, einen Anteil an Alkyl- und/ oder Alkylen- und/oder Hydroxyalkylresten mit mehr als 3 C-Atomen von bis zu 20 Gew.-%, vorzugsweise von 5 bis 15 Gew.-%, und eine Glasübergangstemperatur zwischen 10 und 40°C aufweisen, mit
(B) 50 bis 100 Mol%, bezogen auf die freien Epoxidgruppen von (A), eines primär-tertiären Diamins, vorzugsweise eines N,N-Dialkylaminoalkylamins, und
(C) gleichzeitig oder anschließend die gegebenenfalls verbleibenden freien Epoxidgruppen mit einem primären oder sekundären Amin umsetzt, und
(D) das Reaktionsprodukt mit 50 bis 100 Mol% Formaldehyd, bezogen auf die Summe der primären Aminogruppen der gemäß (B) und (C) eingesetzten Amine, unter Bildung von Oxazolidinstrukturen umsetzt.

**2.** Verfahren nach Anspruch 1, <u>dadurch gekennzeichnet</u>, daß man als Komponente (A) modifizierte Epoxidharze einsetzt, die nach dem Schema

Z - Y - X - Y - Z

aufgebaut sind, wobei als Ausgangsprodukte für X ein aliphatisches Diepoxidharz mit Polyoxyalkylenstrukturen, für Y ein primäres (Hydroxy)alkylmonoamin oder ein sekundäres (Polyoxy)alkylendiamin oder ein Diphenol und für Z ein Bisphenol A-Epoxidharz verwendet werden.

**3.** Verwendung der gemäß den Ansprüchen 1 und 2 hergestellten Pigmentpastenharze für kathodisch abscheidbare Überzugsmittelzusammensetzungen.

**Claims**

**Claims for the following Contracting States : BE, DE, FR, GB, IT, NL, SE**

**1.** Process for the preparation of pigment paste resins based on modified epoxy resins for cathodically depositable coating compositions, characterized in that
(A) a diepoxide compound, or a mixture of several diepoxide compounds, which contain, based on their total weight, 10 to 50% by weight of polyoxyalkylene structures, and up to 20% by weight, preferably 5 to 15% by weight, of alkyl and/or alkylene and/or hydroxy-alkyl radicals with more than 3 carbon atoms, and have a glass transition temperature between 10 and 40°C, are reacted with
(B) 50 to 100 mol%, based on the free epoxide groups in (A), of a primary-tertiary diamine, preferably an N,N-dialkylaminoalkylamine, and
(C) any remaining free epoxide groups are reacted with a primary or secondary amine either at the same time or subsequently and
(D) the reaction product is reacted with 50 to 100 mol% of formaldehyde, based on the total of the primary amino groups of the amines used in (B) and (C), with the formation of oxazolidine structures.

**2.** Process according to Claim 1, characterised in that modified epoxy resins which have the schematic structure

Z - Y - X - Y - Z,

are used as the component (A), an aliphatic diepoxy resin having polyoxyalkylene structures being used as the starting product for X, a primary (hydroxy)alkylmonoamine or a secondary (polyoxy)alkylenediamine or a diphenol being used as the starting product for Y and a bisphenol A-epoxy resin being used as the starting product for Z.

**3.** Pigment paste resins prepared according to Claims 1 and 2.

**4.** Use of pigment paste resins prepared according to Claims 1 and 2 for cathodically depositable coating compositions.

**Claims for the following Contracting State : ES**

**1.** Process for the preparation of pigment paste resins based on modified epoxy resins for cathodically depositable coating compositions, characterized in that
(A) a diepoxide compound, or a mixture of several diepoxide compounds, which contain, based on their total weight, 10 to 50% by weight of polyoxyalkylene structures, and up to 20% by weight, preferably 5 to 15% by weight, of alkyl and/or alkylene and/or hydroxy-alkyl radicals with more than 3 carbon atoms, and have a glass transition temperature between 10 and 40°C, are reacted with
(B) 50 to 100 mol%, based on the free epoxide groups in (A), of a primary-tertiary diamine, preferably an N,N-dialkylaminoalkylamine, and
(C) any remaining free epoxide groups are reacted with a primary or secondary amine either at the same time or subsequently and
(D) the reaction product is reacted with 50 to 100 mol% of formaldehyde, based on the total of the primary amino groups of the amines used in (B) and (C), with the formation of oxazolidine structures.

**2.** Process according to Claim 1, characterised in that modified epoxy resins which have the schematic structure

$$Z - Y - X - Y - Z,$$

are used as the component (A), an aliphatic diepoxy resin having polyoxyalkylene structures being used as the starting product for X, a primary (hydroxy)alkylmonoamine or a secondary (polyoxy)alkylenediamine or a diphenol being used as the starting product for Y and a bisphenol A-epoxy resin being used as the starting product for Z.

**3.** Use of pigment paste resins prepared according to Claims 1 and 2 for cathodically depositable coating compositions.

**Revendications**

**Revendications pour les Etats contractants suivants : BE, DE, FR, GB, IT, NL, SE**

**1.** Procédé de préparation de résines pour pâtes de pigments à base de résines époxy modifiées pour des compositions de revêtement déposables à la cathode, caractérisé en ce que l'on fait réagir
(A) un composé diépoxy ou un mélange de plusieurs composés diépoxy qui présentent, par rapport à leur masse totale, une fraction de de 10 à 50 % en masse de structures polyoxyalkyléniques, une fraction allant jusqu'à 20 % en masse, de préférence de 5 à 15 % en masse, de restes alkyle et/ou alkylène et/ou hydroxyalkyle de plus de 3 atomes de carbone, et qui ont une température de transition vitreuse comprise entre 10 et 40°C, avec
(B) 50 à 100 % en moles, par rapport aux groupes époxy libres de (A), d'une diamine primaire - tertiaire, de préférence d'une N,N-dialkylaminoalkylamine, et
(C) on fait réagir, en même temps ou après, les groupes époxy libres éventuellement restants avec une amine primaire ou secondaire, et
(D) on fait réagir le produit réactionnel avec 50 à 100 % en moles de formaldéhyde, par rapport à la somme des groupes amino primaires des amines introduites selon (B) et (C), en formant des structures oxazolidine.

**2.** Procédé selon la revendication 1, caractérisé en ce que l'on utilise comme constituant (A) des résines époxy modifiées constituées selon le schéma

$$Z - Y - X - Y - Z$$

les produits de départ utilisés étant une résine diépoxy aliphatique comportant des structures polyalkyléniques pour X, une (hydroxy)alkylmonoamine primaire ou une (polyoxy)alkylènediamine secondaire ou un diphénol pour Y, et une résine Bisphénol A-époxy pour Z.

3.  Résines pour pâtes de pigments préparées selon les revendications 1 et 2.

4.  Utilisation des résines pour pâtes de pigments préparées selon les revendications 1 et 2 pour des compositions de revêtements déposables à la cathode.

**Revendications pour l'Etat contractant suivant : ES**

1.  Procédé de préparation de résines pour pâtes de pigments à base de résines époxy modifiées pour des compositions de revêtement déposables à la cathode, caractérisé en ce que l'on fait réagir
    (A) un composé diépoxy ou un mélange de plusieurs composés diépoxy qui présentent, par rapport à leur masse totale, une fraction de de 10 à 50 % en masse de structures polyoxyalkyléniques, une fraction allant jusqu'à 20 % en masse, de préférence de 5 à 15 % en masse, de restes alkyle et/ou alkylène et/ou hydroxyalkyle de plus de 3 atomes de carbone, et qui ont une température de transition vitreuse comprise entre 10 et 40°C, avec
    (B) 50 à 100 % en moles, par rapport aux groupes époxy libres de (A), d'une diamine primaire - tertiaire, de préférence d'une N,N-dialkylaminoalkylamine, et
    (C) on fait réagir, en même temps ou après, les groupes époxy libres éventuellement restants avec une amine primaire ou secondaire, et
    (D) on fait réagir le produit réactionnel avec 50 à 100 % en moles de formaldéhyde, par rapport à la somme des groupes amino primaires des amines introduites selon (B) et (C), en formant des structures oxazolidine.

2.  Procédé selon la revendication 1, caractérisé en ce que l'on utilise comme constituant (A) des résines époxy modifiées constituées selon le schéma

    $$Z - Y - X - Y - Z$$

    les produits de départ utilisés étant une résine diépoxy aliphatique comportant des structures polyalkyléniques pour X, une (hydroxy)alkylmonoamine primaire ou une (polyoxy)alkylènediamine secondaire ou un diphénol pour Y, et une résine Bisphénol A-époxy pour Z.

3.  Utilisation des résines pour pâtes de pigments préparées selon les revendications 1 et 2 pour des compositions de revêtements déposables à la cathode.